# EUROPEAN PATENT APPLICATION

(11) **EP 2 474 738 A2**
(43) Date of publication of application: **11.07.2012**
(21) Application number: 10813412.3
(22) Date of filing: 31.08.2010
(51) Int. Cl.: F04B 9/02, F04B 35/01, F04B 53/14, F16H 21/00

(54) **POWER MULTIPLIER SYSTEM WITH LEVERS**

(30) Priority: 01.09.2009 US 239034 P; 10.08.2010 US 854162
(71) Applicant: Bastos Ribeiro, Renato, 90.450-210 Porto Alegre (BR)
(72) Inventor: Bastos Ribeiro, Renato, 90.450-210 Porto Alegre (BR)
(74) Representative: Nieuwenhuys, William Francis
(86) International application number: PCT/IB2010/053909
(87) International publication number: WO 2011/027294

(57) **Abstract**

**"POWER MULTIPLIER LEVER SYSTEM".** The objective of this present invention is to present a power multiplier lever system that gives an increase in mechanical power generated by the motor thereby giving greater power to the piston giving a greater compression capacity that makes air compression possible without the need to use a large quantity of mechanical power.

## Description

This disclosure relates to a power multiplier levers system that gives an increase in mechanical power generated by the motor thereby giving greater piston movement.

Industrial development was always followed by improvements in energy source use. Automation of industrial processes demanded, and still demand, a great use of energy, which has numerous forms of utilization according to the objective to be achieved. Electrical power the most traditional of the forms mentioned, next hydraulic characterized by its use when great forces are used and finally compressed air which has many uses.

Therefore compressed air is an input used in industry a lot and it is possible to see its use in many varied industrial fields, such as, for example, in the production process of plastic parts, in pneumatic conveying, in industrial machine controls among other uses.

Therefore the importance that such energy acquired in industrial and technological development is unquestionable. The high efficiency level of compressed air use, the ease in which it is conducted and the non generation of harmful waste make this input into one of the new power resources of the industrial age.

Moreover, air is easily found in nature. However, to compress it is necessary to use compressors and from then on, the use of this power show its few but relevant negative points.

Air compressors are the equipments with which we turn this fluid into a power source of summary importance. We have already pointed out above the facilities and benefits for industry that air compressor has brought to industrial development.

However, to compress air in the cylinder it is necessary to use a high powered motor which in some situations makes the use of this type of compression unsuitable because of the motor and/or the compressor sizes that should be utilized. Moreover, the power loss that occurs during its production means that air compressor use in industry is still limited and industries choose other compressor types with other compressible fluids, such as oil for example.

Air compressors are equipments that raises air pressure using mechanical means usually driven by electric motors or internal combustion engines. During this process power used is lost making the total useful work very small in comparison with the power spent. Therefore, in reality it is the power loss that is the main problem that impedes a greater and better air compressor use.

Just as, there are many disclosure patents which create in some way mean to compensate or avoid power loss in the compression process. The American patent US 6419454, for example, deals with a method to control a system consisting of multiple compressors driven bt electric motors which by synchronizing the compressor drives loses less power.

Also the Japanese patent, JP10238474, shows an air compressor that uses a high and low pressure discharge tank system in such a way that the power used is saved during the process.

Moreover, several Brazilian patents deal with power multiplication systems, such as, for example: PI 9502446-8, that deals with a motor power multiplier using crankshafts, pulleys and steel cables or chains and PI 0702406-1, that deals with a lever power multiplier giving power savings and less final cost to the consumer, this multiplier works with a lever arm, pulleys and ratchets. The two process above, because they use pulleys, have a lot of friction on the pulley axle that causes a significant resistance source thereby losing its objective of multiplying power/energy.

Other processes, in order to solve this problem use articulations and levers: PI 0201322-3, that deals with a power multiplier using an axle with a center deviation connected to a piston and levers through articulations, PI 8302216-3, that proposes a sequential power with a continuous or intermittent working capacity which can operate in both low or high rotation, and PI 8702053-0, that deals with a leverage motor in which the power is a function of the leverage degree of every lever, the lever quantity and lever linkage quantity. However, these three processes have a leverage system after the pistons and so the power increase generated does not give any benefit regarding the power necessary for piston movement.

The disclosures in these prior patents are incorporated by reference herein in their entirety.

### SUMMARY

Therefore, an objective of this disclosure is to supply a power multiplier lever system that gives an increase in mechanical power generated by the motor thereby giving a greater power to the piston giving a greater compression capacity that makes air compression possible without the need to use a large quantity of mechanical power.

To achieve the objective above the power multiplier lever system is made of wheels and levers positioned at distinct angles which operate as a multiplier making the use of a high powered motor unnecessary, in other words, it is unnecessary to produce a large quantity of mechanical power.

### DRAWINGS

Figure 1 is a front view of the first power multiplier lever system combination, where we can see the first lever pair is positioned at 90º in relation to the floor;
Figure 2 is a front view of the first power multiplier lever system combination, where we can see the first lever pair has started its movement in function of the axle rotation which induces movement in the wheel to which the first lever pair is coupled;
Figure 3 is a front view of the first power multiplier lever system combination, where we can see the first lever pair continues moving;
Figure 4 is a perspective view of the first power multiplier lever system combination, where we can see the lever pairs;
Figure 5 is a front view of a second power multiplier lever system combination, where we can see the first lever pair is positioned at 90º in relation to the floor;
Figure 6 is a front view of a second power multiplier lever system combination, where we can see the first lever pair has started its movement in function of the axle rotation which induces movement in the wheel to which the first lever pair is coupled;
Figure 7 is a front view of a second power multiplier lever system combination, where we can see the first lever pair continues moving;
Figure 8 is a front view of a third power multiplier lever system combination, where we can see the first lever pair is positioned at 0° in relation to the floor;
Figure 9 is a front view of a third power multiplier lever system combination, where we can see the first lever pair has started its movement in function of the axle rotation which induces movement in the wheel to which the first lever pair is coupled;
Figure 10 is a front view of a third power multiplier lever system combination, where we can see the first lever pair continues moving;

### DETAILED DESCRIPTION OF THE INVENTION

A power multiplier lever system having a power multiplier lever system that provides an increase of mechanical power generated by the motor, thereby giving greater power to the piston, which makes air compression possible without needing to use a large quantity of mechanical power, comprised by levers, wheels, connectors and pistons. The wheels and levers are positioned at distinct angles which operate as a power multiplier when activated. The axle power/torque is multiplied from the power generating source due to the angles made by the levers position. Two wheels are connected directly to the motor axle and are also connected to the first levers. The last pair o levers is connected to the pistons.

The power multiplier lever system can have the selected combination of a system consist of 7 lever pairs where the first is connected to the wheels that are directly coupled to the motor axle. The first pair of levers is connected to the wheels in opposite positions.

The power multiplier lever system can have the selected combination of a system consist of 6 lever pairs, where the first pair is connected to the wheels that are coupled directly to the motor axle.

The power multiplier lever system can have the selected combination of a system consist of 8 lever pairs, where the first pair is connected to the wheels that are coupled directly to the motor axle.

The power multiplier lever system can have the selected combination of a system comprises of 7 lever pairs where the first is connected to the wheels that are directly coupled to the motor axle.

The power multiplier lever system can have the selected combination of a system comprises of 6 lever pairs where the first is connected to the wheels that are directly coupled to the motor axle.

The power multiplier lever system can have the selected combination of a system comprises of 8 lever pairs where the first is connected to the wheels that are directly coupled to the motor axle.

The power multiplier lever system causes the axle power/torque to be multiplied from the power generating source due to the angles made by the levers position. These angles the consequence of the position of the levers are defined in function of the objective for which it will be used.

Two wheels are directly connected to the motor axle; these wheels are connected to the first levers. Afterward we have a sequence of lever pairs which will depend on our final objective. The last lever pair will be connected to the pistons.

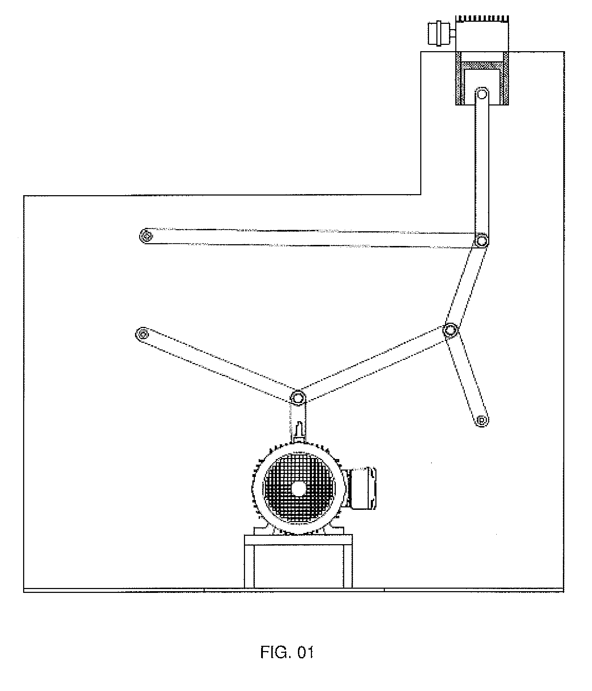

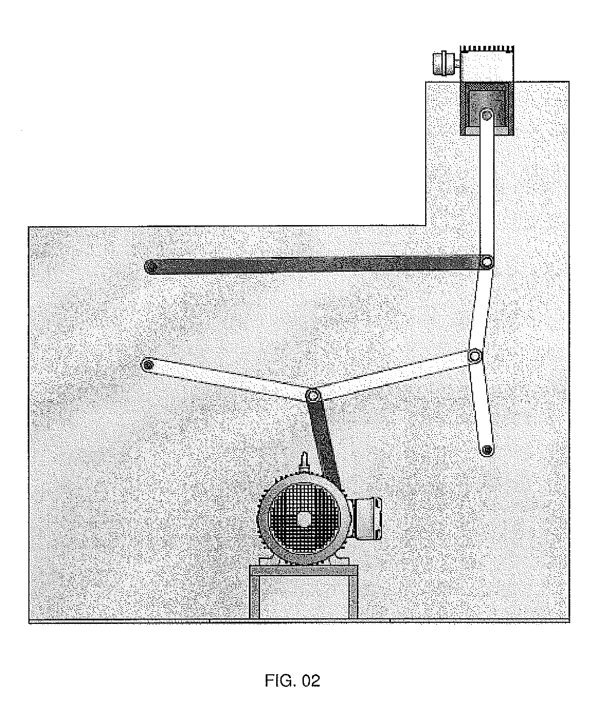

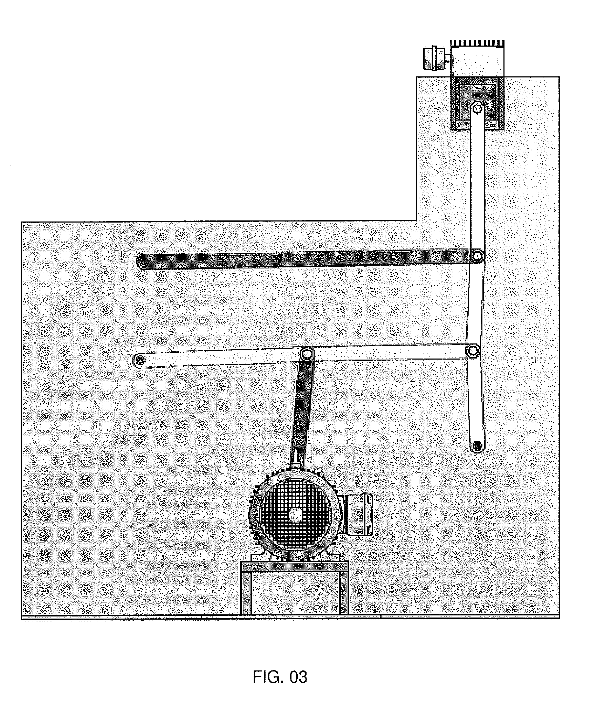

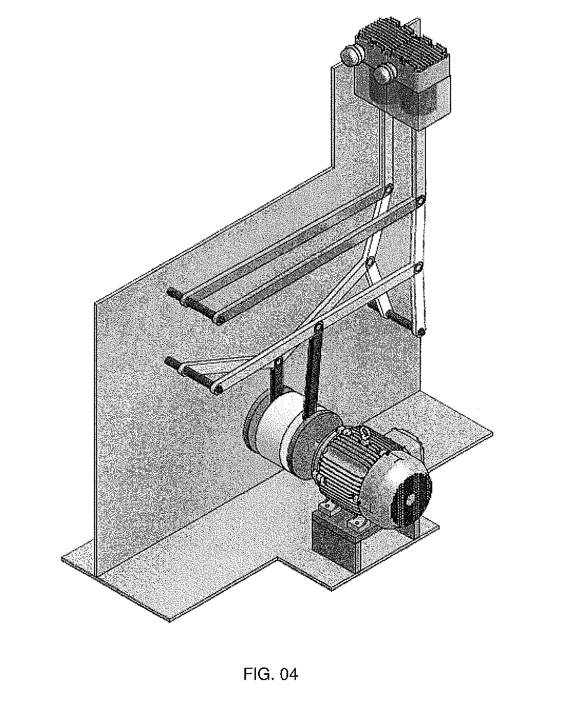

In the first selected combination (it can be seen in Figures 1 to 4), there is a lever system with 7 lever pairs where the first lever pair is connected to the wheels that are coupled directly to the motor axle. This first lever pair is connected to the wheels in opposite positions, in other words, when the wheels are stationary in their starting position one lever of the pair is positioned at a point of this wheels and the other lever of the same pair is positioned at exactly 180° from this point.

At the opposite end of the one fixed to the wheel we fix another lever and so on and the last lever pair will couple to the pistons.

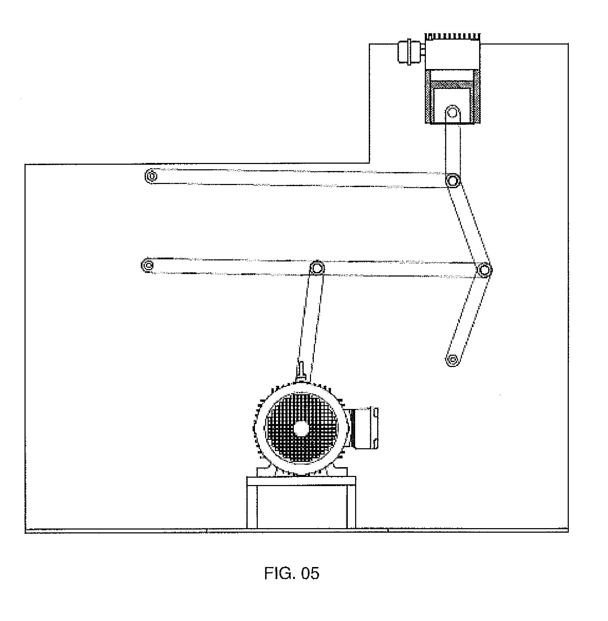

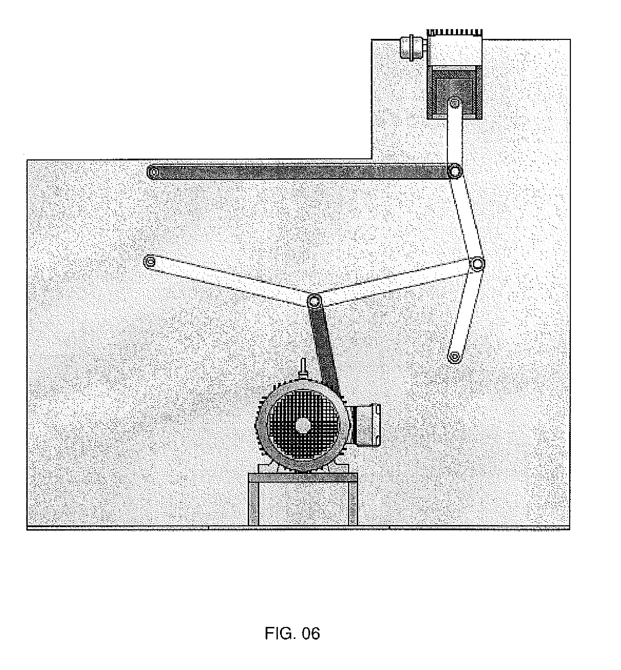

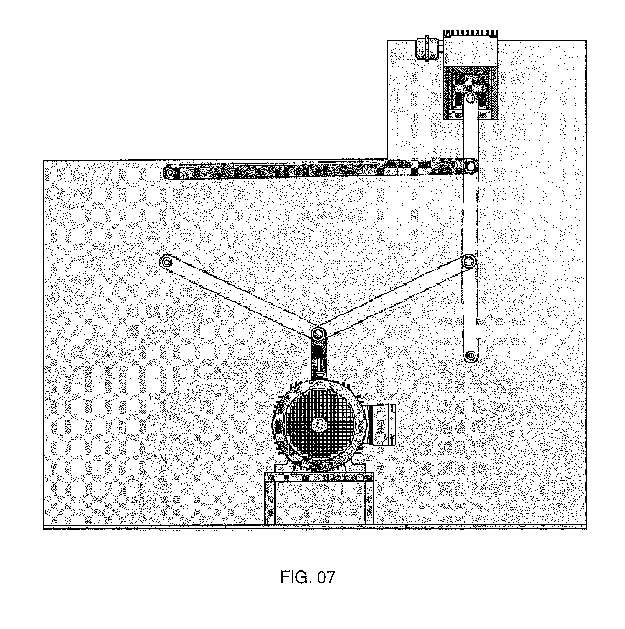

In a second selected combination (it can be seen in Figures 5 to 7), there is a lever system with 6 lever pairs where the first lever pair is connected to the wheels that are coupled directly to the motor axle. This first lever pair is connected to the wheels in opposite positions, in other words, when the wheels are stationary in their starting position one lever of the pair is positioned at a point of this wheels and the other lever of the same pair is positioned at exactly 180° from this point.

At the opposite end of the one fixed to the wheel we fix another lever and so on and the last lever pair will couple to the pistons.

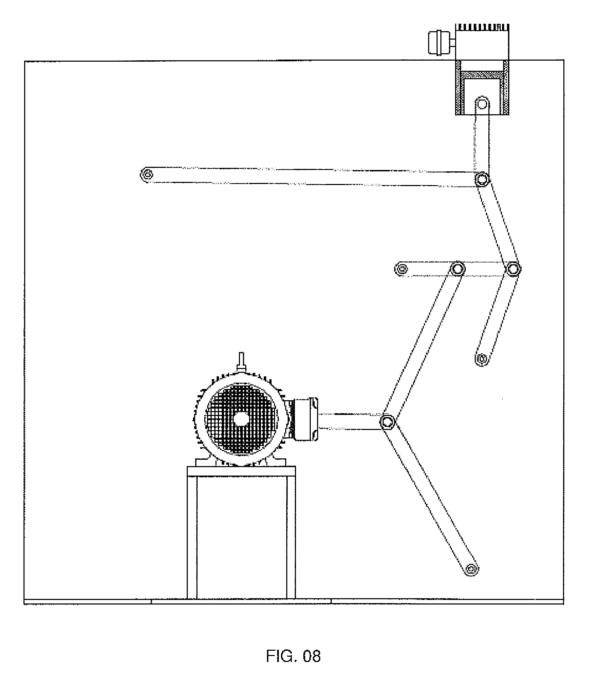

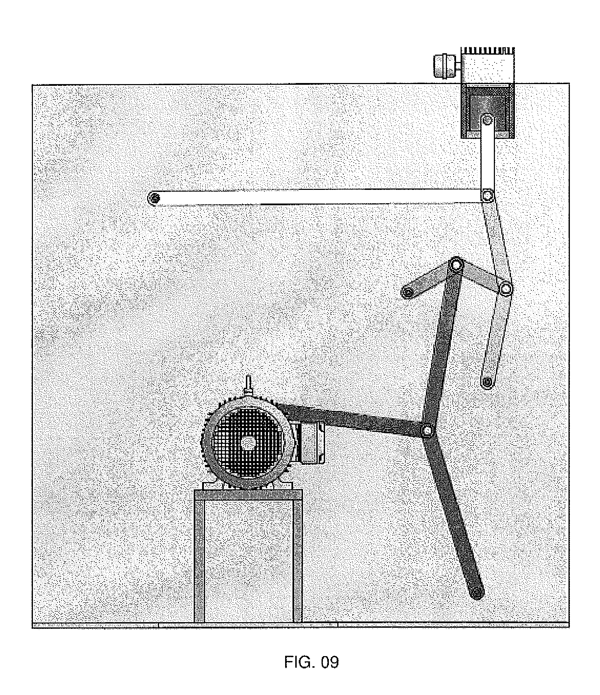

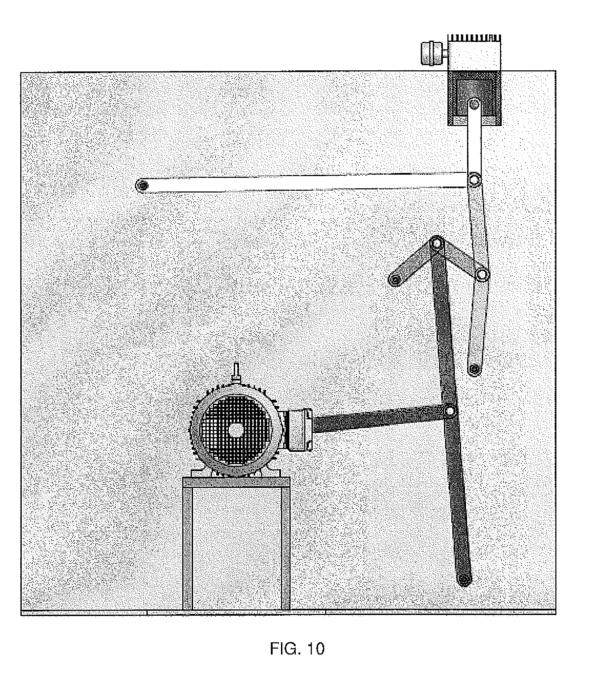

In a third selected combination (it can be seen in Figures 8 to 10), there is a lever system with 8 lever pairs where the first lever pair is connected to the wheels that are coupled directly to the motor axle. This first lever pair is connected to the wheels in opposite positions, in other words, when the wheels are stationary in their starting position one lever of the pair is positioned at a point of this wheels and the other lever of the same pair is positioned at exactly 180° from this point.

At the opposite end of the one fixed to the wheel we fix another lever and so on and the last lever pair will couple to the pistons.

Therefore this disclosure resolves a problem that has impeded the greater use of air compressors in industry, the high relative cost of power use.

It should be evident to technical experts that this disclosure can be configured in many other specific forms without leaving the spirit or scope of the disclosure. In particular, it should be understood that the disclosure can be configured in the described forms.

Therefore the examples and configurations presented should be considered illustrative and not restrictive and the disclosure should not be limited to the details supplied in this document, but can be modified inside the scope and equivalence of the attached claims.

## Claims

1. "**POWER MULTIPLIER LEVER SYSTEM**", C**HARACTERIZED** by having a power multiplier lever system that provides an increase of mechanical power generated by the motor, thereby giving greater power to the piston, which makes air compression possible without needing to use a large quantity of mechanical power, comprised by levers, wheels, connectors and pistons.

2. "**POWER MULTIPLIER LEVER SYSTEM",** in accordance with claim 1, **CHARACTERIZED by** the wheels and levers being positioned at distinct angles which operate as a power multiplier when activated.

3. "**POWER MULTIPLIER LEVER SYSTEM"**, in accordance with claim 1 **CHARACTERIZED by** the axle power / torque being multiplied from the power generating source due to the angles made by the levers position.

4. "**POWER MULTIPLIER LEVER SYSTEM**", in accordance with claim 1 **CHARACTERIZED by** two wheels that are connected directly to the motor axle and are also connected to the first levers.

5. **"POWER MULTIPLIER LEVER SYSTEM",** in accordance with 1 **CHARACTERIZED by** the last pair of levers being connected to the pistons.

6. "**POWER MULTIPLIER LEVER SYSTEM**", in accordance with any one of the above claims **CHARACTERIZED by** the selected combination of a system consists of 7 lever pairs where the first is connected to the wheels that are directly coupled to the motor axle.

7. "**POWER MULTIPLIER LEVER SYSTEM",** in accordance with claim 6, **CHARACTERIZED by** the first pair of levers being connected to the wheels in opposite positions.

8. **"POWDER MULTIPLIER LEVER SYSTEM**", in accordance with any one of the above claims **CHARACTERIZED by** a second selected combination of a lever system consists of 6 lever pairs, where the first pair is connected to the wheels that are coupled directly to the motor axle.

9. "**POWER MULTIPLIER LEVER SYSTEM**", in accordance with any one of the above **CHARACTERIZED by** a third selected combination of a lever system consists of 8 lever pairs, where the first pair is connected to the wheels that are coupled directly to the motor axle.

10. "**POWER MULTIPLIER LEVER SYSTEM**", in accordance with any one of the above claims **CHARACTERIZED BY** the selected combination of a system comprises 7 lever pairs where the first is connected to the wheels that are directly coupled to the motor axle.

11. **"POWDER MULTIPLIER LEVER SYSTEM**", in accordance with claim 10, **CHARACTERIZED by** the first pair of levers being connected to the wheels in opposite positions.

12. **"POWER MULTIPLIER LEVER SYSTEM"**, in accordance with any one of the above claims **CHARACTERIZED by** a second selected combination of a lever system comprises 6 lever pairs, where the first pair is connected to the wheels that are coupled directly to the motor axle.

13. "**POWER MULTIPLIER LEVER SYSTEM**", in accordance with any one of the above claims **CHARACTERIZED by** a third selected combination of a lever system comprises 8 lever pairs, where the first pair is connected to the wheels that are coupled directly to the motor axle.
